# EUROPEAN PATENT SPECIFICATION

(11) **EP 0 778 314 B1**
(45) Date of publication and mention of the grant of the patent: **19.05.1999**
(21) Application number: 96119550.0
(22) Date of filing: 05.12.1996
(51) Int. Cl.: C08L 23/10

(54) **Polypropylene resin composition**
Polypropylenmassen
Composé de résine de polypropylène

(30) Priority: 05.12.1995 JP 316952/95; 05.12.1995 JP 316953/95
(43) Date of publication of application: 11.06.1997
(73) Proprietor: JAPAN POLYOLEFINS CO., LTD., Tokyo (JP); TOYOTA JIDOSHA KABUSHIKI KAISHA, Aichi-ken 471-8571 (JP)
(72) Inventor: Washiyama, Junichiro, Kawasaki Dev. Cent., Japan, Kawasaki-ku, Kawasaki-shi, Kanagawa-ken (JP); Maeda, Hiroyuki, Kawasaki Plastics Lab., Kawasaki-shi, Kanagawa-ken (JP); Takenouchi, Hiroshi, Kawasaki Dev. Cent., Japan, Kawasaki-ku, Kawasaki-shi, Kanagawa-ken (JP); Beppu, Takayuki, Kawasaki Dev. Cent., Japan, Kawasaki-ku, Kawasaki-shi, Kanagawa-ken (JP); Moteki, Yoshihiro, Kawasaki Dev. Cent., Japan, Kawasaki-ku, Kawasaki-shi, Kanagawa-ken (JP); Sakai, Kazuhiko, Kawasaki Dev. Cent., Japan, Kawasaki-ku, Kawasaki-shi, Kanagawa-ken (JP); Jagawa, Yasutoshi, Toyota-shi, Aichi-ken (JP); Nomura, Takao, Toyota-shi, Aichi-ken (JP); Nishio, Takeyoshi, Okazaki-shi, Aichi-ken (JP)
(74) Representative: Hansen, Bernd, Dr. Dipl.-Chem.

(56) References cited:
- EP-A- 0 273 228
- EP-A- 0 566 141
- US-A- 5 304 599

## Description

### BACKGROUND OF THE INVENTION

### 1. Field of the Invention

The present invention relates to a polypropylene resin composition which is superior in impact resistance and rigidity, and which is excellent as a material for use in automobile parts, and the like.

### 2. Description of Related Art

Conventionally, as polypropylene resin compositions which are superior in impact resistance and rigidity, there are blend polymers of polypropylenes (such as polypropylene homopolymers, propylene block copolymers, and propylene random copolymers) and ethylene-propylene rubbers; and blend polymers of polypropylene, ethylene-propylene rubbers, and ethylene-butene rubbers; and the like.

However, while materials comprising blend polymers of polypropylene and ethylene-propylene rubber are sufficiently impact resistant, their tensile elongation and rigidity are not adequate. On the other hand, while materials comprising blend polymers of polypropylene, ethylene-propylene rubber, and ethylene-butene rubber are improving with regard to tensile elongation and rigidity, they have the draw back of having poor impact resistance at low temperatures.

### SUMMARY OF THE INVENTION

The present invention has been accomplished in order to solve the above problem; the object of the present invention is to provide a polypropylene resin composition which is suitable as a material for molded articles, having excellent rigidity, superior impact resistance, and tensile elongation, being superior in its balance of physical properties, being excellent in moldability, and having a beautiful appearance of the surface, as well as to provide a molded article formed from such a polypropylene resin composition.

The above-mentioned problem can be solved by means of a polypropylene resin comprising:
(A) a polypropylene, 50∼70% by weight;
(B) a polystyrene-ethylene/propylene-polystyrene tri-block copolymer containing 15∼40% by weight styrene, 3∼15% by weight;
(C) a polystyrene-ethylene/butene-polystyrene tri-block copolymer containing 15∼40% by weight styrene, 3∼15% by weight; and
(D) a talc, 10∼30% by weight;
wherein the proportion of polystyrene-ethylene/propylene-polystyrene tri-block copolymer component (B) with respect to the total amount of the above-mentioned polystyrene-ethylene/propylene-polystyrene tri-block copolymer component (B) and the above-mentioned polystyrene-ethylene/butene-polystyrene tri-block copolymer component (C) is 20∼80% by weight.

The above-mentioned polypropylene resin composition can also contain:
(E) a polyethylene-ethylene/butene-polyethylene tri-block copolymer, 1∼5% by weight.

The polypropylene resin composition of the present invention exhibits the following advantages:
(1) superior impact resistance;
(2) superior tensile elongation;
(3) excellent rigidity; and
(4) excellent embossing transferring properties.

From these advantages, the polypropylene resin composition of the present invention is excellent, in particular, as a material for use in solid molded articles such as parts for use in automobiles. For example, it is suitable as a material with the superior rigidity, impact resistance at room temperature, tensile elongation, and embossing transferring properties required for automobile instrument panels, and interiors, such as for door trim, and pillars. In addition, due to its superior low temperature impact resistance, it is also suitable as a material for external use (excluding bumper bars) such as in side body molding.

### DESCRIPTION OF THE PREFERRED EMBODIMENTS

The present invention is explained in detail in the following.

### (A) Polypropylene

As the polypropylene used in the present invention, whichever of a homopolymer of propylene (homopolypropylene), a block copolymer, and a random copolymer, or a mixture of two or more of these in combination can be used.

As the comonomer of the random copolymer, or block copolymer, α-olefins such as ethylene, butene-1, pentene-1, and hexene-1, and excluding propylene, can be used; and from among these, ethylene is particularly preferable. The propylene content of these copolymers is preferably 60∼100% by mole, and, in particular, more preferably 80∼99% by mole.

In a block copolymer which uses ethylene as the α-olefin, the ethylene-propylene block within the molecule functions as a rubber component showing rubber elasticity by being dispersed in the homopolypropylene block. As the content of this rubber component, an amount of 10∼25% by weight of the block copolymer is preferable. An amount of 10∼20% by weight of the block copolymer is more preferable.

The melt flow rate (measured in accordance with JIS K6758; and hereinafter also referred to as MFR) of the polypropylene is preferably 5∼500 g/10 minutes. When the MFR is less than 5 g/10 minutes, the fluidity of the obtained resin composition is inferior, and moldability is poor. When the MFR exceeds 500 g/10 minutes, the impact resistance of the resin composition is inferior.

These polypropylenes can be polypropylenes which have been mixed with organic peroxides, and visbroken so as to raise low MFRs to within the above-mentioned range.

In addition, a polypropylene having an MFR within the above-mentioned range and which is a mixture of two or more polypropylenes having different fluidity is also suitable.

### (B) Polystyrene-Ethylene/Propylene-Polystyrene Tri-Block Copolymer (hereinafter also called "SEPS")

In the polystyrene-ethylene/propylene-polystyrene tri-block copolymer used in the present invention, an alternating copolymer block of ethylene/propylene is positioned in the center portion of the molecule, and polystyrene blocks are positioned on both sides thereof.

The content of the polystyrene block in this SEPS is preferably 15∼40% by weight. When the content of the polystyrene block is less than 15% by weight, the rigidity and surface hardness of the obtained polypropylene resin composition are degraded, and when the content exceeds 40% by weight, the low temperature impact resistance of the polypropylene resin composition is degraded.

With regard to the fluidity of the SEPS, the MFR thereof is preferably 0.5∼70 g/10 minutes at 230°C under a load of 2.16 kg. When the MFR is less than 0.5 g/10 minutes, degradation of low temperature impact resistance may occur due to poor dispersibility, and when the MFR exceeds 70 g/10 minutes, degradation of the modulus of elasticity and degradation of the elongation occur. In addition, at 230°C under a load of 2.16 kg, an MFR greater than 5 and 40 or less is even more preferable. Alternatively, at 200°C under a load of 5 kg, an MFR greater than 2 and at most 40 is preferable. When this MFR is 2 or less, there is a tendency for the embossing transference of the molded article to be poor, and, depending on the use (for example, when used unpainted as an interior material), it is unsuitable.

The SEPS can be manufactured by means of the hydrogenation of styrene and isoprene block copolymer. For this, there is a method in which hydrogenation is conducted after successively polymerizing styrene, isoprene, and styrene; there is a method in which a di-block copolymer of styrene-isoprene is first manufactured, and then after making this into a tri-block copolymer using a coupling agent, hydrogenation is conducted; and there is a method in which hydrogenation is conducted after direct polymerization of a tri-block copolymer using a bifunctional initiator. In whichever case, di-block copolymer is generated; and it is preferable for the proportion of the di-block copolymer to be less than 40% by weight of the total. This is because when the proportion exceeds 40%, rigidity and surface hardness are degraded.

### (C) Polystyrene-Ethylene/Butene-Polystyrene Tri-Block Copolymer (hereinafter, also called "SEBS")

In the polystyrene-ethylene/butene-polystyrene tri-block copolymer used in the present invention, an alternating copolymer block of ethylene/butene is positioned in the center portion of the molecule, and polystyrene blocks are positioned on both sides thereof.

The content of the polystyrene block in the SEBS is preferably 15∼40% by weight. When the content of the polystyrene block is less than 15% by weight, the rigidity and surface hardness of the obtained polypropylene resin composition are degraded, and when the content exceeds 40% by weight, the low temperature impact resistance of the polypropylene resin composition is degraded.

In addition, the fluidity of the SEBS is preferably an MFR of 0.5∼70 g/10 minutes under a load of 2.16 kg at 230°C. When the MFR is less than 0.5 g/10 minutes, degradation of low temperature impact resistance may occur due to poor dispersibility, and when the MFR exceeds 70 g/10 minutes, degradation of the modulus of elasticity and degradation of the elongation occur. In addition, under a load of 2.16 kg at 230°C, an MFR greater than 5 and at most 40 is even more preferable. Alternatively, under a load of 5 kg at 200°C, an MFR greater than 2 and at most 40 is preferable. When this MFR is 2 or less, there is a tendency for the embossing transference of the molded article to be poor, and, depending on the use (for example, when used unpainted as an interior material), it is unsuitable.

The SEBS can be manufactured by means of the hydrogenation of styrene and butadiene copolymer. For this, there is a method in which hydrogenation is conducted after successively polymerizing styrene, butadiene, and styrene; there is a method in which a di-block copolymer of styrene-butadiene is first manufactured, and then after making this into a tri-block copolymer using a coupling agent, hydrogenation is conducted; and there is a method in which hydrogenation is conducted after direct polymerization of a tri-block copolymer using a bifunctional initiator. In whichever case, di-block copolymer is generated; and it is preferable for the proportion of the di-block copolymer to be less than 40% by weight of the total. This is because when the proportion exceeds 40%, rigidity and surface hardness are poor.

### (D) Talc

The talc used in the present invention preferably has an average particle size of 0.3∼3.5 µm, and more preferably of 0.5∼2.5 µm. In addition, an average particle size of 0.5 µm or greater and less than 1 µm is best. An average particle size of less than 0.3 µm is not suitable, since the talc aggregates easily, and since degradation of rigidity and impact resistance occurs. In addition, an particle size of greater than 3.5 µm is not suitable, since decrease in rigidity and impact resistance occurs. Furthermore, an aspect ratio (defined by the ratio of the longest part to the widest part of a plate shaped particle of talc) of the talc used in the present invention of 5 or greater is preferable. In addition, a ratio of 7 or greater is better. When the aspect ratio of the talc is less than 5, there is difficulty in obtaining rigidity. In addition, when using talc, it is possible to improve the dispersibility of the talc by conducting a surface treatment on the talc or by using dispersants or the like.

### (E) Polyethylene-Ethylene/Butene-Polyethylene Tri-Block Copolymer (hereinafter also called "CEBC")

In the polyethylene-ethylene/butene-polyethylene tri-block copolymer used in the present invention, an alternating copolymer block of ethylene/butene is positioned in the center portion of the molecule, and crystalline polyethylene blocks are positioned on both sides thereof.

The content of the polyethylene block in the CEBC is preferably 15∼40% by weight. When the content of the polyethylene block is less than 15% by weight, the rigidity, heat resistance, and surface hardness of the obtained polypropylene resin composition are degraded, and when the content exceeds 40% by weight, the low temperature impact resistance of the polypropylene resin composition is degraded.

In addition, with regard to the fluidity of the CEBC, the MFR thereof is preferably 0.5∼70 g/10 minutes at 230°C under a load of 2.16 kg. Furthermore, an MFR of 0.5∼10 g/10 minutes is more preferable, and an MFR of 1∼5 g/10 minutes is even more preferable. When the MFR is less than 0.5 g/10 minutes, degradation of low temperature impact resistance may occur due to poor dispersibility, and when the MFR exceeds 70 g/10 minutes, decrease in the modulus of elasticity and degradation of the tensile elongation occur.

The CEBC can be manufactured by means of the hydrogenation of the tri-block copolymer of polybutadiene polymerized at positions-1,4 and polybutadiene polymerized at positions-1,2. For this, there is a method in which a di-block copolymer of butadiene is first manufactured, and then after making this into a tri-block copolymer using a coupling agent, hydrogenation is conducted. In this case, di-block copolymer is generated; and it is preferable for the proportion of the di-block copolymer to be less than 40% by weight of the total. This is because when the proportion exceeds 40%, it dissolves in polypropylene, and rigidity and surface hardness are degraded.

### (Composition Proportions)

The proportion of the above-mentioned component (A) with respect to the polypropylene resin composition of the present invention is 50∼70% by weight. When the proportion of component (A) is less than 50%, heat resistance is degraded, and when the proportion of component (A) exceeds 70% by weight, impact resistance is degraded.

On the other hand, the proportion of the above-mentioned component (B) with respect to the polypropylene resin composition of the present invention is 3∼15% by weight. When the proportion of component (B) with respect to the above-mentioned resin composition is less than 3% by weight, the low temperature impact resistance and surface hardness of the obtained polypropylene resin composition are degraded, and when the proportion of component (B) exceeds 15% by weight, elongation is degraded.

In the same way, the proportion of the above-mentioned component (C) with respect to the polypropylene resin composition of the present invention is 3∼15% by weight. When the proportion of component (C) with respect to the above-mentioned resin composition is less than 3% by weight, elongation of the obtained polypropylene resin composition is degraded, and when the proportion of component (C) exceeds 15% by weight, low temperature impact resistance, and elongation are degraded.

Furthermore, it is preferable for the proportion of the total weight of component (B) and component (C) with respect to the total weight of component (A), component (B), and component (C) to be at least 8% by weight and less than 25% by weight. When the proportion of the total weight of component (B) and component (C) is less than 8%, the impact resistance of the obtained composition is inferior, and when the proportion is 25% or greater, the surface hardness tends to be degraded, and is not suitable for some uses.

Furthermore, the proportion of the talc (component (D)) with respect to the polypropylene resin composition of the present invention is 10∼30% by weight. When it is less than this range, the desired rigidity, and impact resistance cannot be obtained, and when it is greater than 30%, the specific gravity increases, and hardness decreases.

In addition, when component (E) is additionally used, the proportion of component (E) with respect to the polypropylene resin composition of the present invention is 1∼5% by weight. When the proportion of component (E) with respect to this resin composition is less than 1% by weight, the improvement in the tensile elongation of the obtained polypropylene resin composition is small, and when the proportion exceeds 5% by weight, rigidity and surface hardness decrease.

In addition, it is necessary for the proportion of component (B) with respect to the total weight of component (B) and component (C) be 20∼80% by weight, preferably 30∼70% by weight, and more preferably 35∼65% by weight. It has been found that, in the present invention, by using component (B) and component (C) together in the above-mentioned proportions, synergistic improvements in impact resistance can be expected. For example, when the proportion of component (B) is less than 20%, the desired synergistic improvements in impact resistance do not result from the use of component (B) and (C) together, and furthermore, degradation of low temperature impact resistance occurs. On the other hand, when the proportion of component (B) exceeds 80% by weight, in the same way as above, the desired synergistic improvements in impact resistance do not result from the use of component (B) and component (C) together, and furthermore there is the problem that tensile elongation is inferior.

Even when the proportion of component (B) and component (C) are within the above-mentioned range, when the amount of component (B) is relatively greater than the amount of component (C), low temperature impact resistance tends to be superior. On the other hand, when the amount of component (C) is relatively greater than the amount of component (B), tensile elongation tends to be superior. In addition, when the amount of component (B) and the amount of component (C) are approximately equal, room temperature impact resistance tends to be superior.

In addition, when component (E) is used in addition, the proportion of component (E) used with respect to the total weight of component (B), component (C), and component (E) is preferably 5∼25% by weight. Furthermore, 7∼20% by weight is even more preferable. In this way, by additionally using component (E), it is possible to realize more effectively the synergistic improvements in impact resistance resulting form the use of component (B) and component (C) together as described above. In addition to this, tensile elongation is improved compared with the use of only component (B) and component (C) together. Furthermore, when the proportion of component (E) is less than 5% by weight, these above-mentioned effects cannot be exhibited. In addition, when the proportion of component (E) exceeds 25% by weight, while tensile elongation is improved, degradation of rigidity and heat resistance becomes large problems.

### (Manufacturing Method for the Polypropylene Resin Composition)

When manufacturing the polypropylene resin composition of the present invention, additives which are widely used in the field of synthetic resins and synthetic rubbers such as stabilizers against heat, oxygen, and light; flame retardants; fillers; colorants; lubricants; plasticizers; antistatic agents; and the like can be added in accordance with application objectives and in ranges which do not essentially damage the characteristics of the polypropylene resin composition of the present invention.

The following are examples of antioxidants:

Dibutylhydroxytoluene, alkylated phenol, 4,4'-thiobis-(6-t-butyl-3-methylphenol), 4,4'-butylidenebis-(6-t-butyl-3-methylphenol), 2,2'-methylenebis-(4-methyl-6-t-butylphenol), 2,2'-methylenebis-(4-ethyl-6-t-butylphenol), 2,6-di-t-butyl-4-ethylphenol, 1,1,3-tris(2-methyl-4-hydroxy-5-t-butylphenyl)butane, n-octadecyl 3-(4-hydroxy-3,5-di-t-butylphenyl)propionate, tetrakis[methylene-3-(3,5-di-t-butyl-4-hydroxyphenyl) propionate]methane, dilauryl thiodipropionate, distearyl thiodipropionate, and dimyristyl thiopropionate. In addition, examples of hindered phenol antioxidants are triethyleneglycol bis[3-(3-t-butyl-5-methyl-4-hydroxyphenyl)propionate], 1,6-hexanediol bis[3-(3,5-di-t-butyl-4-hydroxyphenyl)propionate], 2,4-bis(n-octylthio)-6-(4-hydroxy-3,5-di-t-butylanilino)-1,3,5-triazine, pentaerythritol tetrakis[3-(3,5-di-t-butyl-4-hydroxyphenyl)propionate], 2,2-thiodiethylene bis[3-(3,5-di-t-butyl-4-hydroxyphenyl)propionate], octadecyl 3-(3,5-di-t-butyl-4-hydroxyphenyl)propionate, N,N'-hexamethylenebis(3,5-di-t-butyl-4-hydroxyhydrocinnamamide), 3,5-di-t-butyl-4-hydroxybenzylphosphonate diethyl ester, 1,3,5-trimethyl-2,4,6-tris(3,5-di-t-butyl-4-hydroxybenzyl)benzene, tris(3,5-di-t-butyl-4-hydroxybenzyl) isocyanurate, octylated diphenylamine, and 2,4-bis[(octylthio)methyl]-o-cresol. In addition, examples of hydrazine antioxidants are N,N'-bis[3-(3,5-di-t-butyl-4-hydroxyphenyl)propionyl]hydrazine and the like. Furthermore, phenol antioxidants, phosphite antioxidants, thioether antioxidants, heavy metal inactivating agents, or the like are applicable.

Examples of ultraviolet ray absorbents are 2-(2'-hydroxy-5'-methylphenyl)benzotriazol, 2-(2'-hydroxy-3'-t-butyl-5'-methylphenyl)-5-chlorobenzotriazol, 2-(2'-hydroxy-3',5-di-t-butylphenyl)-5-chlorobenzotriazol, 2-hydroxy-4-n-octoxybenzophenone, phenyl salicylate, 2-(5-methyl-2-hydroxyphenyl)benzotriazol, 2-[2-hydroxy-3,5-bis(α,α-dimethylbenzyl)phenyl]-2H-benzotriazol, 2-(3,5-di-t-butyl-2-hydroxyphenyl)benzotriazol, 2-(3-t-butyl-5-methyl-2-hydroxyphenyl)-5-chlorobenzotriazol, 2-(3,5-di-t-butyl-2-hydroxyphenyl)-5-chlorobenzotriazol, 2-(3,5-di-t-amyl-2-hydroxyphenyl)benzotriazol, 2-(2'-hydroxy-5'-t-octylphenyl)benzotriazol, and hydroxyphenylbenzotriazol derivatives. Alternatively, dimethyl succinate·1-(2-hydroxyethyl)-4-hydroxy-2,2,6,6-tetramethylpiperidine polycondensates, poly[{6-(1,1,3,3-tetramethylbutyl)amino-1,3,5-triazin-2,4-diyl}{(2,2,6,6-tetramethyl-4-piperidyl)imino}hexamethylene{(2,2,6,6-tetramethyl-4-piperidyl)imino}], N,N'-bis(3-aminopropyl)ethylenediamine·2,4-bis[N-butyl-N-(1,2,2,6,6-pentamethyl-4-piperidyl)amino]-6-chloro-1,3,5-triazine condensates, bis(2,2,6,6-tetramethyl-4-piperidyl) sebacate, bis(1,2,2,6,6-pentamethyl-4-piperidyl) 2-(3,5-di-t-butyl-4-hydroxybenzyl)-2-n-butylmalonate, and 2,4-di-t-butylphenyl 3,5-di-t-butyl-4-hydroxybenzoate.

Examples of applicable flame retardants are as follows: polybromodiphenyl oxide, tetrabromobisphenol A, brominated epoxyhexabromocyclododecane, ethylenebistetrabromophthalimide, brominated polystyrene dechlorane, brominated polycarbonate, polyphosphonate compounds, halogenated polyphosphonate, triazine, red phosphorus, tricresyl phosphate, triphenyl phosphate, cresyl diphenyl phosphate, triallyl phosphate, trisilyl phosphate, trialkyl phosphate, trischloroethyl phosphate, trischloropropyl phosphate, tris(dichloropropyl) phosphate, antimony trioxide, aluminium hydroxide, and magnesium hydroxide. Alternatively applicable are silicone oil, stearic acid, calcium stearate, magnesium stearate, carbon black, titanium dioxide, silica, mica, montmorillonite, and the like.

The polypropylene resin composition of the present invention can be manufactured by uniformly combining the above-mentioned components (A), (B), (C), and (D), and optionally component (E), together with the additives. This combining method (mixing method) is not particularly limited, and any method which is generally conducted in the field of synthetic resins can be applied. Examples of mixing methods are methods in which dry blending is conducted using mixers such as a Henschel mixer, a tumbler, and a ribbon mixer; and methods in which mixing is conducted using mixers such as an open roll, an extrusion mixer, a kneader, and a Banbury mixer, while melting the components. Within these methods, in order to obtain an even more uniform resin composition, two or more of these mixing methods can be used together (for example, dry blending the components in advance, and then melt mixing the obtained composition). Even when additionally using dry blending, and even when using one, two or more melt mixing methods, for manufacturing molded articles by means of the following molding methods mentioned below, it is particularly preferable to use pellets manufactured using a pelletizer.

In the above-mentioned mixing methods, even when melt mixing, and even when molding by means of the molding methods mentioned below, it must be conducted at temperatures in which the used resin melts. However, since heat decomposition and deterioration occur when the resin is used at high temperatures, in general, it is preferable for the molding to be conducted at a temperature of 170∼350°C, and preferably at 180∼260°C.

The MFR of the polypropylene resin composition according to the present invention may be suitably adjusted in view of a molding method to be employed and desired physical properties of the molded article; the range of the MFR may be commonly 1 to 100 g/10 minutes, preferably 5 to 60 g/10 minutes, and more preferably 10 to 40 g/10 minutes. An MFR of less than 1 g/10 minutes results in poor processability. An MFR exceeding 100 g/10 minutes results in poor mechanical properties.

The polypropylene resin composition of the present invention can be molded into the desired shape by the application of molding methods which are generally applied in the field of synthetic resins, such as injection molding methods, extrusion molding methods, compression molding methods, and vacuum molding methods. In addition, after molding a sheet using an extrusion molder, the sheet can be molded into the desired shape by means of secondary molding using vacuum molding methods, pressurized air molding methods, and the like.

Among these molding methods, suitable in order to obtain a molded article exhibiting desirable embossing transference are a method in which a web in a melted condition formed by a calender or an extruder is passed between an embossing roll and a rubber roll, a method in which pressing is carried out intermittently, and a method in which a resin composition is casted on an embossed belt.

The range of the Izod impact strength of a molded article formed from the polypropylene resin composition according to the present invention may be commonly 5 kgf·cm/cm or greater, preferably 15 kgf·cm/cm or greater, and more preferably 18 kgf·cm/cm or greater. In the case where the Izod impact strength is less than 5 kgf·cm/cm, the use of the material is limited.

The range of the flexural modulus of a molded article formed from the polypropylene resin composition according to the present invention may be commonly 15000 to 40000 kgf/cm², preferably 18000 to 35000 kgf/cm², and more preferably 20000 to 35000 kgf/cm². In the case where the flexural modulus is less than 15000 kgf/cm², the use of the material is limited.

The range of the tensile elongation of a molded article formed from the polypropylene resin composition according to the present invention may be commonly 100% or greater, preferably 200% or greater, and more preferably 300% or greater. In the case where the tensile elongation is less than 100%, the use of the material is limited.

The polypropylene resin composition of the present invention is excellent, in particular, as a material for use in solid molded articles such as parts for use in automobiles. For example, it is suitable as a material with the superior rigidity, impact resistance at room temperature, tensile elongation, and embossing transferring properties required for automobile instrument panels, and interiors, such as for door trim, and pillars. In addition, due to its superior low temperature impact resistance, it is also suitable as a material for external use (excluding bumper bars) such as in side body molding.

### (Examples)

In the following, the present invention is explained based on Examples.

In addition, in the Examples and Comparative Examples shown below, each property was measured using the following methods.

Izod impact strength (units: kgf·cm/cm) was measured with test pieces having a notch in conformity with ASTM D256, at room temperature and at -30°C.

Flexural modulus (units: kgf/cm²) was measured in conformity with ASTM D790 at a temperature of 23°C.

Tensile elongation (%) was measured in accordance with ASTM D638, at a temperature of 23°C.

In addition, the MFR of component (B) and component (C) were measured under at 230°C under a load of 2.16 kg, and at 200°C under a load of 5 kg, and referred to MFR(230) and MFR(200) respectively.

Embossing transferring properties were evaluated by molding a flat sheet with embossing at 230°C, and then visually inspecting the transference of the embossing. The transference was evaluated using the following system:
- ⓞ: transference was particularly good,
- ○: transference was good,
- Δ: transference was inferior, and
- ×: transference was bad.

In addition, the type and characteristics of each of the components (A), (B), (C), (D), and (E), used in the Examples and the Comparative Examples are as follows.

### (A) Polypropylene

As the polypropylene, a homo-type polypropylene "MA810B" (hereinafter referred to as PP-1), having an MFR of 35 g/10 minutes, and manufactured by Showa Denko K.K.; and a block-type polypropylene "MK711H" (hereinafter referred to as PP-2), having a rubber content of 10% by weight, a MFR of 45 g/10 minutes, and manufactured by the same manufacturer, were used.

### (B) Polystyrene-Ethylene/Propylene-Polystyrene Tri-Block Copolymer (SEPS)

As the polystyrene-ethylene/propylene-polystyrene tri-block copolymer, the four types shown in Table 1 were used.

**Table 1**

| | Styrene content (wt%) | MFR(230) | MFR(200) | Di-block content (wt%) |
|---|---|---|---|---|
| SEPS-1 | 18 | 6.6 | 3.5 | 30 |
| SEPS-2 | 30 | 2.5 | 0.7 | 5 or less |
| SEPS-3 | 30 | 7 | 2.2 | 5 or less |
| SEPS-4 | 20 | 20 | 9 | 5 or less |

### (C) Polystyrene-Ethylene/Butene-Polystyrene Tri-Block Copolymer (SEBS)

The three types shown in Table 2 were used as the polystyrene-ethylene/butene-polystyrene tri-block copolymer.

**Table 2**

| | Styrene content (wt%) | MFR(230) | MFR(200) | Di-block content (wt%) |
|---|---|---|---|---|
| SEBS-1 | 20 | 9 | 9.5 | 5 or less |
| SEBS-2 | 30 | 28 | 15 | 5 or less |
| SEBS-3 | 30 | 1 | 0.3 | 5 or less |

### (D) Talc

The talc used was a talc having a particle size of 2.2 µm measured by means of a laser precipitation method, and an aspect ratio of 7 measured using a transmission electron microscope. In addition, a talc having a particle size of 0.7 µm and an aspect ratio of 5.5 was also used.

### (E) Polyethylene-Ethylene/Butene-Polyethylene Tri-Block Copolymer (CEBC)

The two types of polyethylene-ethylene/butene-polyethylene tri-block copolymer used are shown in Table 3.

**Table 3**

| | MFR | Di-block content (wt%) |
|---|---|---|
| CEBC-1 | 1 | 5 or less |
| CEBC-2 | 3 | 5 or less |

In addition, for comparison, ethylene/propylene rubber (limiting viscosity [η]=2.5 dl/g; propylene content of 25% by weight; hereinafter referred to as EPR) and ethylene/butene rubber (limiting viscosity [η]=3.5 dl/g; butene content of 15% by weight, hereinafter referred to as EBR) were used in place of the tri-block copolymer (TBC).

In addition, polystyrene-ethylene/propylene di-block copolymer (called SEP) was also used for comparison. The styrene content was 37% by weight, the MFR(230) was 0.7, and the MFR(200) was 0.6.

Each of these components were combined in the proportions (units: % by weight) shown in Table 4 (combinations not containing CEBC) and Table 5 (combinations containing CEBC), and dry blended for 5 minutes in a Henschel mixer. The obtained mixture was made into pellets by kneading using a unidirectional twin-screw extruder (diameter: 30 mm) set at 180°C.

By injection molding a pellet using an injection molder set at 200°C, a test piece for measurement was prepared. The results for the Izod impact test, flexural modulus, and tensile elasticity for each test piece are shown in Table 6 (combinations not containing CEBC) and Table 7 (combinations containing CEBC).

**Table 4**

| | PP | | SEPS | | SEBS | | Others | | Talc | |
|---|---|---|---|---|---|---|---|---|---|---|
| | Type | Proportion | Type | Proportion | Type | Proportion | Type | Proportion | Particle size (µm) | Proportion |
| Example | | | | | | | | | | |
| 1 | PP-1 | 62 | SEPS-1 | 10 | SEBS-1 | 10 | | | 2.2 | 18 |
| 2 | PP-2 | 68 | SEPS-1 | 7 | SEBS-1 | 7 | | | 2.2 | 18 |
| 3 | PP-1 | 62 | SEPS-2 | 10 | SEBS-1 | 10 | | | 2.2 | 18 |
| 4 | PP-1 | 62 | SEPS-1 | 10 | SEBS-2 | 10 | | | 2.2 | 18 |
| 5 | PP-1 | 62 | SEPS-1 | 5 | SEBS-1 | 15 | | | 2.2 | 18 |
| 6 | PP-1 | 68 | SEPS-1 | 10 | SEBS-1 | 10 | | | 2.2 | 12 |
| 7 | PP-1 | 55 | SEPS-1 | 10 | SEBS-1 | 10 | | | 2.2 | 25 |
| 8 | PP-1 | 62 | SEPS-3 | 10 | SEBS-1 | 10 | | | 2.2 | 18 |
| 9 | PP-1 | 62 | SEPS-4 | 10 | SEBS-1 | 10 | | | 2.2 | 18 |
| 10 | PP-1 | 62 | SEPS-1 | 10 | SEBS-3 | 10 | | | 2.2 | 18 |
| 11 | PP-1 | 62 | SEPS-1 | 10 | SEBS-1 | 10 | | | 0.7 | 18 |

| Comparative Example | | | | | | | | | | |
|---|---|---|---|---|---|---|---|---|---|---|
| 1 | PP-1 | 62 | | | SEBS-1 | 20 | | | 2.2 | 18 |
| 2 | PP-1 | 62 | SEPS-1 | 20 | | | | | 2.2 | 18 |
| 3 | PP-1 | 62 | SEPS-1 | 10 | | | EPR | 10 | 2.2 | 18 |
| 4 | PP-1 | 62 | | | SEBS-1 | 10 | EBR | 10 | 2.2 | 18 |
| 5 | PP-1 | 62 | | | SEBS-1 | 10 | SEP | 10 | 2.2 | 18 |
| 6 | PP-1 | 62 | SEPS-1 | 2 | SEBS-1 | 18 | | | 2.2 | 18 |
| 7 | PP-1 | 62 | SEPS-1 | 18 | SEBS-1 | 2 | | | 2.2 | 18 |
| 8 | PP-1 | 62 | SEPS-2 | 10 | | | | | 2.2 | 18 |
| | | | SEPS-4 | 10 | | | | | | |
| 9 | PP-1 | 62 | | | SEBS-1 | 10 | | | 2.2 | 18 |
| | | | | | SEBS-3 | 10 | | | | |

**Table 5**

| | PP | | SEPS | | SEBS | | CEBC | | Others | | Talc | |
|---|---|---|---|---|---|---|---|---|---|---|---|---|
| | Type | Proportion | Type | Proportion | Type | Proportion | Type | Pro por tion | Type | Proportion | Particle size (µm) | Proportion |
| Example | | | | | | | | | | | | |
| 12 | PP-1 | 62 | SEPS-1 | 9 | SEBS-1 | 9 | CEBC-1 | 2 | | | 2.2 | 18 |
| 13 | PP-2 | 68 | SEPS-1 | 6 | SEBS-1 | 6 | CEBC-2 | 2 | | | 2.2 | 18 |
| 14 | PP-1 | 62 | SEPS-2 | 9 | SEBS-1 | 9 | CEBC-1 | 2 | | | 2.2 | 18 |
| 15 | PP-1 | 62 | SEPS-1 | 9 | SEBS-2 | 9 | CEBC-1 | 2 | | | 2.2 | 18 |
| 16 | PP-1 | 62 | SEPS-1 | 5 | SEBS-1 | 13 | CEBC-1 | 2 | | | 2.2 | 18 |
| 17 | PP-1 | 68 | SEPS-1 | 9 | SEBS-1 | 9 | CEBC-1 | 2 | | | 2.2 | 12 |
| 18 | PP-1 | 55 | SEPS-1 | 9 | SEBS-1 | 9 | CEBC-1 | 2 | | | 2.2 | 25 |
| 19 | PP-1 | 62 | SEPS-1 | 8 | SEBS-1 | 8 | CEBC-1 | 4 | | | 2.2 | 18 |
| 20 | PP-1 | 62 | SEPS-3 | 9 | SEBS-1 | 9 | CEBC-1 | 2 | | | 2.2 | 18 |
| 21 | PP-1 | 62 | SEPS-4 | 9 | SEBS-1 | 9 | CEBC-1 | 2 | | | 2.2 | 18 |
| 22 | PP-1 | 62 | SEPS-1 | 9 | SEBS-3 | 9 | CEBC-1 | 2 | | | 2.2 | 18 |
| 23 | PP-1 | 62 | SEPS-1 | 9 | SEBS-1 | 9 | CEBC-1 | 2 | | | 0.7 | 18 |

| Comparative Example | | | | | | | | | | | | |
|---|---|---|---|---|---|---|---|---|---|---|---|---|
| 10 | PP-1 | 62 | | | SEBS-1 | 18 | CEBC-1 | 2 | | | 2.2 | 18 |
| 11 | PP-1 | 62 | SEPS-1 | 18 | | | CEBC-1 | 2 | | | 2.2 | 18 |
| 12 | PP-1 | 62 | SEPS-1 | 9 | | | CEBC-1 | 2 | EPR | 9 | 2.2 | 18 |
| 13 | PP-1 | 62 | | | SEBS-1 | 9 | CEBC-1 | 2 | EBR | 9 | 2.2 | 18 |
| 14 | PP-1 | 62 | | | SEBS-1 | 9 | CEBC-1 | 2 | SEP | 9 | 2.2 | 18 |
| 15 | PP-1 | 62 | SEPS-1 | 2 | SEBS-1 | 16 | CEBC-1 | 2 | | | 2.2 | 18 |
| 16 | PP-1 | 62 | SEPS-1 | 16 | SEBS-1 | 2 | CEBC-1 | 2 | | | 2.2 | 18 |
| 17 | PP-1 | 62 | SEPS-2 | 9 | | | CEBC-1 | 2 | | | 2.2 | 18 |
| | | | SEPS-4 | 9 | | | | | | | | |
| 18 | PP-1 | 62 | | | SEBS-1 | 9 | CEBC-1 | 2 | | | 2.2 | 18 |
| | | | | | SEBS-3 | 9 | | | | | | |
| 19 | PP-1 | 62 | SEPS-1 | 9.5 | SEBS-1 | 10 | CEBC-1 | 0.5 | | | 2.2 | 18 |
| 20 | PP-1 | 62 | SEPS-1 | 7 | SEBS-1 | 7 | CEBC-1 | 6 | | | 2.2 | 18 |

**Table 6**

| | Izod (RT) (kgf·cm/cm) | Izod (-30°C) (kgf·cm/cm) | Flexural modulus (kgf/cm²) | Tensile elongation (%) | Embossing Transference |
|---|---|---|---|---|---|
| Example | | | | | |
| 1 | 22 | 3.5 | 23000 | >500 | ⓞ |
| 2 | 26 | 3.8 | 21000 | 350 | ⓞ |
| 3 | 25 | 3.3 | 23500 | >500 | △ |
| 4 | 25 | 3.0 | 22000 | >500 | ⓞ |
| 5 | 25 | 3.0 | 22000 | >500 | ⓞ |
| 6 | 21 | 3.1 | 18000 | >500 | ⓞ |
| 7 | 30 | 4.1 | 24500 | 400 | ○ ∼ ⓞ |
| 8 | 25 | 3.7 | 23500 | >500 | ⓞ |
| 9 | 22 | 3.5 | 23000 | >500 | ⓞ |
| 10 | 21 | 3.6 | 22000 | 400 | △ |
| 11 | 25 | 3.7 | 23800 | >500 | ⓞ |

| Comparative Example | | | | | |
|---|---|---|---|---|---|
| 1 | 18 | 2.7 | 21500 | >500 | ⓞ |
| 2 | 15 | 3.6 | 23500 | 100 | ⓞ |
| 3 | 13 | 2.7 | 23000 | 100 | ○ |
| 4 | 12 | 2.5 | 23500 | 300 | ○ |
| 5 | 13 | 3.6 | 20000 | 150 | △ ∼ × |
| 6 | 16 | 3.0 | 21500 | >500 | ○ |
| 7 | 18 | 3.6 | 23200 | 100 | ○ |
| 8 | 14 | 4.0 | 23800 | 80 | △ |
| 9 | 18 | 2.8 | 21100 | >500 | △ |

**Table 7**

| | Izod (RT) (kgf·cm/cm) | Izod (-30°C) (kgf·cm/cm) | Flexural modulus (kgf/cm²) | Tensile elongation (%) | Embossing Transference |
|---|---|---|---|---|---|
| Example | | | | | |
| 12 | 25 | 3.5 | 22000 | >600 | ⓞ |
| 13 | 28 | 3.7 | 20000 | >600 | ⓞ |
| 14 | 27 | 3.3 | 21000 | >600 | △ |
| 15 | 28 | 3.1 | 21000 | 500 | ⓞ |
| 16 | 27 | 3.1 | 21200 | >600 | ⓞ |
| 17 | 23 | 3.1 | 18000 | >600 | ⓞ |
| 18 | 32 | 4.0 | 23500 | 500 | ○ ∼ ⓞ |
| 19 | 34 | 4.0 | 22500 | >600 | ○ |
| 20 | 29 | 3.5 | 22500 | >600 | ⓞ |
| 21 | 25 | 3.4 | 22000 | >600 | ⓞ |
| 22 | 24 | 3.4 | 22000 | 400 | △ |
| 23 | 29 | 3.7 | 22800 | >600 | ⓞ |

| Comparative Example | | | | | |
|---|---|---|---|---|---|
| 10 | 20 | 2.7 | 20000 | >600 | ⓞ |
| 11 | 19 | 3.5 | 21000 | 150 | ⓞ |
| 12 | 14 | 2.7 | 21000 | 150 | ○ |
| 13 | 14 | 2.5 | 21000 | 300 | ○ |
| 14 | 13 | 3.4 | 18500 | 200 | × ∼ △ |
| 15 | 18 | 2.9 | 20500 | >600 | ○ |
| 16 | 18 | 3.5 | 22800 | 120 | ○ |
| 17 | 15 | 3.8 | 22800 | 100 | △ |
| 18 | 18 | 2.8 | 20000 | >600 | △ |
| 19 | 20 | 3.6 | 22000 | 500 | ⓞ |
| 20 | 18 | 3.2 | 17000 | >600 | ○ |

From Table 6 and Table 7, it can be understood that the Examples 1∼23 which are within the scope of the present invention are superior in impact resistance, rigidity, and tensile strength, and for which impact resistance, in particular, is excellent. In addition, embossing transference also tends to be excellent.

## Claims

1. A polypropylene resin composition comprising:
a polypropylene, 50∼70% by weight;
a polystyrene-ethylene/propylene-polystyrene tri-block copolymer containing 15∼40% by weight styrene, 3∼15% by weight;
a polystyrene-ethylene/butene-polystyrene tri-block copolymer containing 15∼40% by weight styrene, 3∼15% by weight; and
a talc, 10∼30% by weight,
wherein the proportion of said polystyrene-ethylene/propylene-polystyrene tri-block copolymer with respect to the total amount of said polystyrene-ethylene/propylene-polystyrene tri-block copolymer and said polystyrene-ethylene/butene-polystyrene tri-block copolymer is 20∼80% by weight.

2. A polypropylene resin composition according to claim 1, wherein the proportion of the total amount of said polystyrene-ethylene/propylene-polystyrene tri-block copolymer and said polystyrene-ethylene/butene-polystyrene tri-block copolymer with respect to the total amount of said polypropylene, said polystyrene-ethylene/propylene-polystyrene tri-block copolymer, and said polystyrene-ethylene/butene-polystyrene tri-block copolymer is at least 8% by weight and less than 25% by weight.

3. A polypropylene resin composition according to claims 1 or 2, further comprising a polyethylene-ethylene/butene-polyethylene tri-block copolymer, 1∼5% by weight.

4. A polypropylene resin composition according to claim 3, wherein the proportion of said polyethylene-ethylene/butene-polyethylene block copolymer with respect to the total amount of said polystyrene-ethylene/propylene-polystyrene tri-block copolymer, said polystyrene-ethylene/butene-polystyrene tri-block copolymer, and said polyethylene-ethylene/butene-polyethylene tri-block copolymer is at least 5% by weight and at most 25% by weight.

5. A polypropylene resin composition according to claims 3 or 4, wherein said polyethylene-ethylene/butene-polyethylene tri-block copolymer has a melt flow rate of at least 0.5 g/10 minutes and at most 70 g/10 minutes at 230°C under a load of 2.16 kg.

6. A polypropylene resin composition according to any of claims 3 to 5, wherein said polyethylene-ethylene/butene-polyethylene tri-block copolymer has a polyethylene block content of at least 15% by weight and at most 40% by weight.

7. A polypropylene resin composition according to any of claims 1 to 6, wherein said polystyrene-ethylene/propylene-polystyrene tri-block copolymer has a melt flow rate of greater than 2 g/10 minutes and at most 40 g/10 minutes at 200°C under a load of 5 kg.

8. A polypropylene resin composition according to any of claims 1 to 7, wherein said polystyrene-ethylene/butene-polystyrene tri-block copolymer has a melt flow rate of greater than 2 g/10 minutes and at most 40 g/10 minutes at 200°C under a load of 5 kg.

9. A polypropylene resin composition according to any of claims 1 to 8, wherein said talc has an average particle size of at least 0.3 µm and at most 3.5 µm.

10. A polypropylene resin composition according to claim 9, wherein said talc has an average particle size of at least 0.3 µm and less than 1 µm.

## Patentansprüche

1. Polypropylenharz-Zusammensetzung, umfassend:
50 - 70 Gew.-% eines Polypropylens;
3 - 15 Gew.-% eines Polystyrol-Ethylen/Propylen-Polystyrol-Triblockcopolymers, das 15 - 40 Gew.-% Styrol enthält;
3 - 15 Gew.-% eines Polystyrol-Ethylen/Buten-Polystyrol-Triblockcopolymers, das 15 - 40 Gew.-% Styrol enthält; und
10 - 30 Gew.-% eines Talks,
worin der Anteil des Polystyrol-Ethylen/Propylen-Polystyrol-Triblockcopolymers in bezug auf die Gesamtmenge an Polystyrol-Ethylen/Propylen-Polystyrol-Triblockcopolymer und Polystyrol-Ethylen/Buten-Polystyrol-Triblockcopolymer 20 - 80 Gew.-% beträgt.

2. Polypropylenharz-Zusammensetzung gemäß Anspruch 1, worin der Anteil der Gesamtmenge an Polystyrol-Ethylen/Propylen-Polystyrol-Triblockcopolymer und Polystyrol-Ethylen/Buten-Polystyrol-Triblockcopolymer in bezug auf die Gesamtmenge an Polypropylen, Polystyrol-Ethylen/Propylen-Polystyrol-Triblockcopolymer und Polystyrol-Ethylen/Buten-Polystyrol-Triblockcopolymer mindestens 8 Gew.- % und weniger als 25 Gew.-% beträgt.

3. Polypropylenharz-Zusammensetzung gemäß Anspruch 1 oder 2, die ferner 1 - 5 Gew.-% eines Polyethylen-Ethylen/Buten-Polyethylen-Triblockcopolymers umfasst.

4. Polypropylenharz-Zusammensetzung gemäß Anspruch 3, worin der Anteil des Polyethylen-Ethylen/Buten-Polyethylen-Triblockcopolymers in bezug auf die Gesamtmenge an Polystyrol-Ethylen/Propylen-Polystyrol-Triblockcopolymer, Polystyrol-Ethylen/Buten-Polystyrol-Triblockcopolymer und Polyethylen-Ethylen/Buten-Polyethylen-Triblockcopolymer mindestens 5 Gew-% und höchstens 25 Gew.-% beträgt.

5. Polypropylenharz-Zusammensetzung gemäß mindestens einem der Ansprüche 3 und 4, worin das Polyethylen-Ethylen/Buten-Polyethylen-Triblockcopolymer einen Schmelzflussindex von mindestens 0,5 g/10 Minuten und höchstens 70 g/10 Minuten bei 230°C unter einer Last von 2,16 kg aufweist.

6. Polypropylenharz-Zusammensetzung gemäß mindestens einem der Ansprüche 3 bis 5, worin das Polyethylen-Ethylen/Buten-Polyethylen-Triblockcopolymer einen Polyethylenblockgehalt von mindesten 15 Gew.-% und höchstens 40 Gew.-% aufweist.

7. Polypropylenharz-Zusammensetzung gemäß mindestens einem der Ansprüche 1 bis 6, worin das Polystyrol-Ethylen/Propylen-Polystyrol-Triblockcopolymer einen Schmelzflussindex von mehr als 2 g/10 Minuten und höchstens 40 g/10 Minuten bei 200°C unter einer Last von 5 kg aufweist.

8. Polypropylenharz-Zusammensetzung gemäß mindestens einem der Ansprüche 1 bis 7, worin das Polystyrol-Ethylen/Buten-Polystyrol-Triblockcopolymer einen Schmelzflussindex von mehr als 2 g/10 Minuten und höchstens 40 g/10 Minuten bei 200°C unter einer Last von 5 kg aufweist.

9. Polypropylenharz-Zusammensetzung gemäß mindestens einem der Ansprüche 1 bis 8, worin der Talk eine durchschnittliche Teilchengröße von mindestens 0,3 µm und höchstens 3,5 µm besitzt.

10. Polypropylenharz-Zusammensetzung gemäß Anspruch 9, worin der Talk eine durchschnittliche Teilchengröße von mindestens 0,3 µm und weniger als 1 µm aufweist.

## Revendications

1. Composition de résine de polypropylène comprenant :
un polypropylène, 50 - 70 % en poids ;
un copolymère tri-séquencé polystyrène-éthylène/propylène polystyrène contenant 15 - 40 % en poids de styrène, 3 - 15 % en poids ;
un copolymère tri-séquencé polystyrène-éthylène/butène-polystyrène contenant 15 - 40 % en poids de styrène, 3 - 15 % en poids ; et
un talc, 10 - 30 % en poids,
dans laquelle la proportion dudit copolymère tri-séquencé polystyrène-éthylène/propylène-polystyrène par rapport à la quantité totale dudit copolymère tri-séquencé polystyrène-éthylène/propylène-polystyrène et dudit copolymère tri- séquencé polystyrène-éthylène/butène-polystyrène est de 20 - 80 % en poids.

2. Composition de résine de polypropylène selon la revendication 1, dans laquelle la proportion de la quantité totale dudit copolymère tri-séquencé polystyrène-éthylène/propylène-polystyrène et dudit copolymère tri-séquencé polystyrène-éthylène/butène-polystyrène par rapport à la quantité totale dudit polypropylène, dudit copolymère tri-séquencé polystyrène-éthylène/propylène-polystyrène et dudit copolymère tri-séquencé polystyrène-éthylène/butène-polystyrène est d'au moins 8% en poids et moins de 25% en poids.

3. Composition de résine de polypropylène selon la revendication 1 ou 2, comprenant, en outre, un copolymère tri-séquencé polyéthylène-éthylène/butène-polyéthylène, 1 - 5 % en poids.

4. Composition de résine de polypropylène selon la revendication 3, dans laquelle la proportion dudit copolymère séquencé polyéthylène-éthylène/butène-polyéthylène par rapport à la quantité totale dudit copolymère tri-séquencé polystyrène-éthylène/propylène-polystyrène, dudit copolymère tri- séquencé polystyrène-éthylène/butène-polystyrène et dudit copolymère tri-séquencé polyéthylène-éthylène/butène-polyéthylène est d'au moins 5% en poids et au plus de 25% en poids.

5. Composition de résine de polypropylène selon la revendication 3 ou 4, dans laquelle ledit copolymère tri- séquencé polyéthylène-éthylène/butène-polyéthylène a un débit en masse fondue d'au moins 0,5 g/10 minutes et d'au plus 70 g/10 minutes, à 230 °C sous une charge de 2,16 kg.

6. Composition de résine de polypropylène selon l'une quelconque des revendications 3 à 5, dans laquelle ledit copolymère tri-séquencé polyéthylène-éthylène/butène-polyéthylène a une teneur en séquencé polyéthylène d'au moins 15% en poids et au plus 40% en poids.

7. Composition de résine de polypropylène selon l'une quelconque des revendications 1 à 6, dans laquelle ledit copolymère tri-séquencé polystyrène-éthylène/propylène-polyéstyrène a un débit en masse fondue supérieur à 2g/10 minutes et au plus de 40g/10 minutes, à 200°C sous une charge de 5 kg.

8. Composition de résine de polypropylène selon l'une quelconque des revendications 1 à 7, dans laquelle ledit copolymère tri-séquencé polystyrène-éthylène/butène-polystyrène a un débit en masse fondue supérieur à 2g/10 minutes et au plus de 40g/10 minutes, à 200°C sous une charge de 5 kg.

9. Composition de résine polypropylène selon l'une quelconque des revendications 1 à 8, dans laquelle ledit talc a une taille particulaire moyenne d'au moins 0,3 µm et au plus de 3,5 µm.

10. Composition de résine de polypropylène selon la revendication 9, dans laquelle ledit talc a une taille particulaire moyenne d'au moins 0,3 µm et inférieure é 1 µm.
